# EUROPEAN PATENT SPECIFICATION

(11) **EP 2 574 225 B1**
(45) Date of publication and mention of the grant of the patent: **11.09.2013**
(21) Application number: 11425243.0
(22) Date of filing: 30.09.2011
(51) Int. Cl.: A01D 34/00

(54) **Apparatus for cutting grass**
Vorrichtung zum Abschneiden von Gras
Appareil pour couper l'herbe

(43) Date of publication of application: 03.04.2013
(73) Proprietor: Bernini, Fabrizio, 52021 Bucine - Arezzo (IT)
(72) Inventor: Bernini, Fabrizio, 52021 Bucine - Arezzo (IT)
(74) Representative: Tansini, Elio Fabrizio

(56) References cited:
- EP-A1- 1 906 205
- EP-A1- 2 082 638
- EP-A2- 1 612 631
- US-A1- 2007 142 964

## Description

The present invention relates to an apparatus for cutting grass.

In particular, the invention relates to an apparatus for cutting grass predisposed to operate within fixed cutting areas.

As is known, lawn mowers are used to maintain lawns, gardens, grassy areas in general, in excellent condition, i.e. maintaining the grass below a certain and substantially uniform height throughout the cutting area.

Often the cutting area is bounded by a perimetral wire or cable, in which an electrical signal is made to propagate; when the lawn mower detects the electrical signal, it can recognise its own position within the cutting area (internal/external), and adjust its movement accordingly.

Document EP 1 906 205 A1 discloses a system for determining a position of a robot inside a work area surrounded by a wire loop. The system can determine whether the robot is inside or outside the loop and evaluate its distance from the perimeter wire.

Typically the perimetral wire is connected to a mains electrical supply in order to source the energy required for the generation and propagation of the above-mentioned electrical signal.

This clearly leads to very significant applicational limitations, related to the fact that the perimetral wires cannot be set up where there is no electrical supply.

This means that the apparatus for the grass cutting, including both the lawn mower and the perimetral wire carrying the electric signal, cannot at present be used, for example, for maintenance of golf courses or other grassy areas which cannot be easily reached by electric power cables.

In addition, a certain consumption of electrical energy is required to perform the operations of generation and propagation/transmission of the electrical signal along the perimetral wire. This aspect is certainly undesirable as it leads to added costs over and above what is required for realising, installing and maintaining the apparatus.

An aim of the present invention is therefore to provide an apparatus for cutting grass that can be used even where no cabled mains electrical supply is available.

A further aim of the invention is to provide an apparatus for cutting grass that can minimize consumption of electrical energy, in particular with reference to the energy necessary for the sending of the electrical signal along the perimetral wire.

These and other aims are substantially attained by an apparatus for cutting grass as described in the accompanying claims.

Further characteristics and advantages will more fully emerge from the description of a preferred and not exclusive embodiment of the invention.

The description is given below with reference to the accompanying figures, in which:
- figure 1 schematically illustrates a lawn mower that is a part of the apparatus according to the invention;
- figure 2 is a block diagram of the lawn mower of figure 1;
- figure 3 schematically illustrates an apparatus according to the present invention;
- figures 4a-4b illustrate signals used in the apparatus according to the invention;
- figure 5 schematically illustrate data used in the apparatus according to the invention.

With reference to the accompanying figures, 200 denotes in its entirety an apparatus for cutting grass according to the present invention.

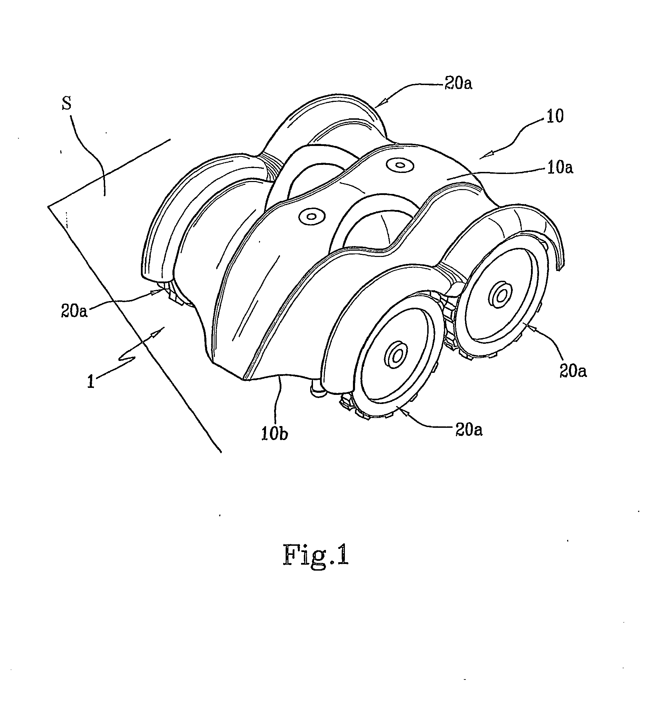

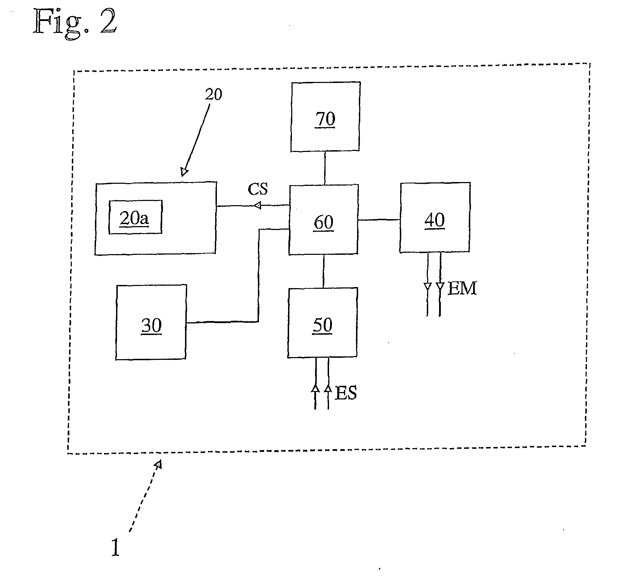

The apparatus 200 primarily comprises a lawn mower 1. The lawn mower 1 (figures 1, 2) comprises a frame 10; the frame 10 may comprise, for example, an upper body 10a and a lower body 10b, preferably removably associated to one another.

The upper body 10a and lower body 10b can be made, for example, of a plastic material.

The lawn mower 1 further comprises movement means 20 mounted on the frame 10 such as to move the lawn mower 1 with respect to a work surface or cutting area S; the latter can be a lawn, garden, flower bed or in general any surface on which the lawn mower 1 is required to operate.

The movement means 20 preferably comprise a plurality of wheels 20a, mounted on the frame 10, and one or more motors, predisposed to cause the wheels 20a to rotate. By way of example, the lawn mower 1 illustrated in the accompanying figures is provided with four wheels 20a, suitably powered.

The lawn mower 1 further comprises one or more blades 30 (schematically shown in figure 2), mounted on the frame 10, for cutting the grass on the work surface S.

The blades 30 are advantageously moved by suitable motors, housed internally of the frame 10.

By way of example, said motors can be electric motors, powered by a battery, which battery can be rechargeable.

The recharging, which takes place at a base station or charging base, is preferably obtained by electrical coupling, in particular inductive. Said battery can preferably also power a processing unit (which will be more fully described herein below), and further electrical/electronic devices provided on board the lawn mower 1.

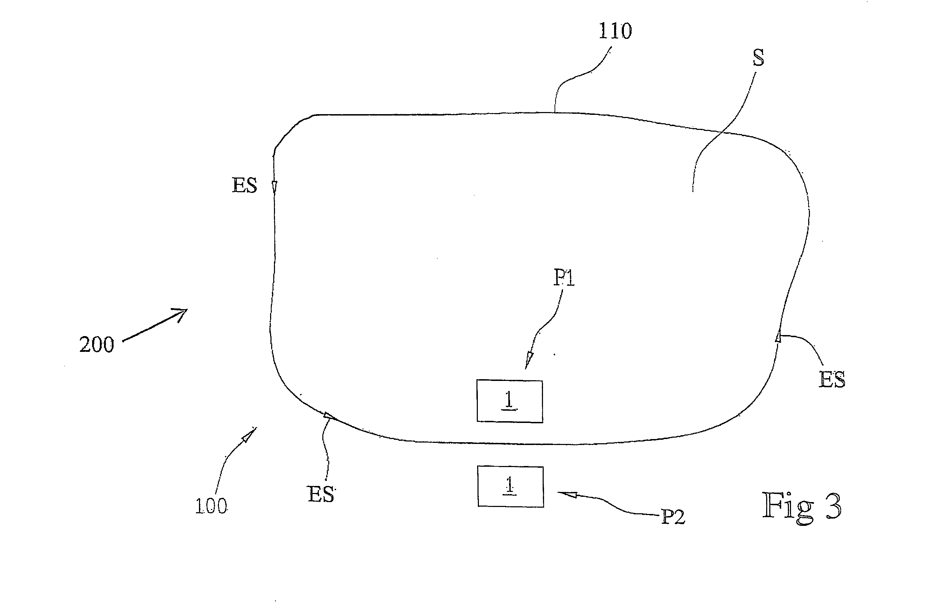

The apparatus 200 further comprises a perimetral structure 100, in turn comprising at least a perimetral wire 110 delimiting said cutting area S (Figure 3).

With the aim of cooperating with the perimetral structure 100, the lawn mower 1 comprises a transmission module 40 for emitting an electromagnetic field EM.

The transmission module 40 can comprise a circuit or a portion of circuit inserted in the lawn mower 1 and carried out "ad hoc" for the emission of the electromagnetic field EM according to predetermined specifications.

The transmission module 40 preferably comprises at least a coil, suitably powered such as to emit the aforementioned electromagnetic field EM.

The perimetral structure 100 is configured for detecting the electromagnetic field EM through the above-mentioned perimetral wire 110 and to cause an electrical signal ES to flow along the perimetral wire 110, using the power supply received through the electromagnetic field EM.

In practice, a current is induced in the perimetral wire 110 by means of the electromagnetic field EM. This induced current therefore constitutes the electrical signal ES.

The electrical signal ES is detected by the lawn mower 1 via a suitable detection module 50 which can preferably comprise one or more inductive elements, such as, for example, one or more coils.

The coil that is a part of the transmission module 40 and the coil that is a part of the detection module 50 are preferably distinct and separate from one another. The lawn mower 1 also advantageously comprises a processing unit 60 configured at least for comparing the detected electrical signal ES with one or more pre-memorised parameters P.

As a function of this comparison, the processing unit 60 generates a control signal CS for the movement means 20, and in particular for the motors active on the wheels 20a.

In particular, by detecting the electrical signal ES and performing the aforementioned comparison, the processing unit 60 can determine whether the lawn mower 1 is located inside or outside the cutting area S. These positions are shown schematically in Figure 3, respectively with references P1 and P2.

Therefore, depending on whether the lawn mower 1 is inside or outside said cutting area S, the processing unit 60 can control the movement means 20, for example in order to return or maintain the lawn mower 1 to or in the cutting area S.

The pre-memorised parameters P are preferably representative of reference values for the power with which the electrical signal ES is detected by the detection module 50.

In other terms, the processing unit 60, as a function of the power with which the electrical signal ES is detected, and as a function of the above-mentioned parameters P, is able to determine whether the lawn mower 1 is located inside or outside the cutting area S. In the preferred embodiment, the pre-memorised parameters P comprise:
- values representing a first increase/decrease profile Z1 indicating an expected trend of the reception power of the electrical signal ES at an approach/distancing of the lawn mover 1 with respect to the perimetral wire 110 in a case where the lawn mower 1 itself is located within the cutting area S;
- values representing a second increase/decrease profile Z2 indicating an expected trend of the reception power of the electrical signal ES at an approach/distancing of the lawn mover 1 with respect to the perimetral wire 110 in a case where the lawn mower 1 itself is located outside the cutting area S.

In greater detail, the variation in power as a function of the distance from the wire 110 represented by the first profile Z1 is slower than the variation represented by the second profile Z2.

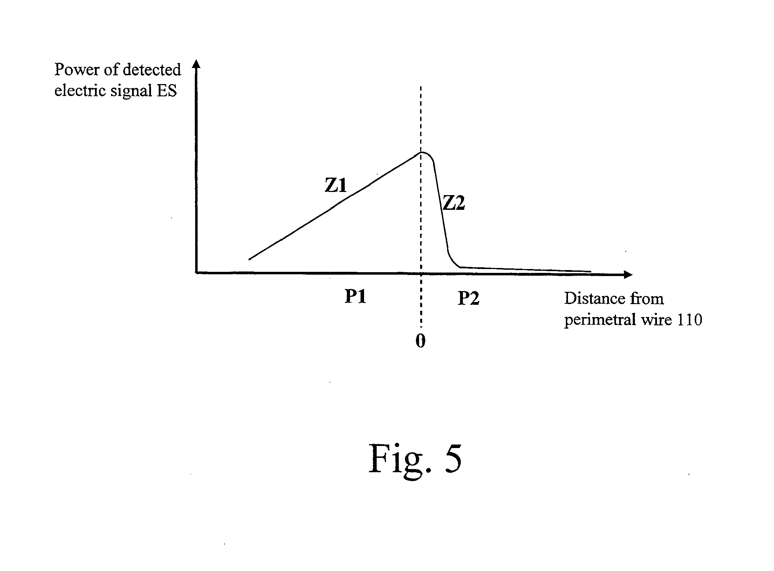

Figure 5 schematically illustrates an example of the progression of profiles Z1 and Z2.

As can be noted, when the lawn mower 1 is located within the cutting area S (position P1), the variation of the power with which the electrical signal ES is received is quite gradual; for example, in figure 5 it is represented as essentially linear (first profile Z1).

In contrast, when the lawn mower 1 is outside the cutting area S (position P2), the variation in the reception power of the electrical signal ES is very abrupt (second profile Z2).

The position denoted by "0" is that in which the lawn mower 1 is substantially superimposed on the perimetral wire 110: the distance from the latter is thus essentially zero, and the reception power substantially maximum.

Note that, except for short stretches in which it starts or stops, the lawn mower 1 moves at a substantially constant speed. Therefore, the concepts expressed here as a function of distance from the perimetral wire 110 can be transferred, in an entirely similar way, into the time domain.

In the light of the above, the processing unit 60 will be configured such as to evaluate the variation over time of the power with which the electrical signal ES is detected by the detection module 50. This variation is closely related (in the ideal case, linearly) to the distance of the lawn mower 1 from the perimetral wire 110. With the profiles Z1, Z2 known, the processing unit 60 can thus determine whether the lawn mower 1 is approaching the perimetral wire 110 coming from inside or outside, and generate the control signal CS accordingly.

The lawn mower 1 can advantageously further comprise a memory register (not shown) in which the processing unit 60 stores the maximum value of the power with which the electrical signal ES is received.

The electromagnetic field EM is preferably defined by one or more electromagnetic signals Y, having predefined profiles.

In a possible embodiment, the electromagnetic signal Y comprises at least a pulse H having finite and limited time duration, and exhibiting a non-periodic waveform. The electromagnetic signal Y preferably comprises two or more pulses H, separated from one another by stretches of waveform constituted by time intervals in which no energy is transmitted.

Even more specifically, each of these pulses H comprises at least two portions H1, H2, one having a different frequency to the other.

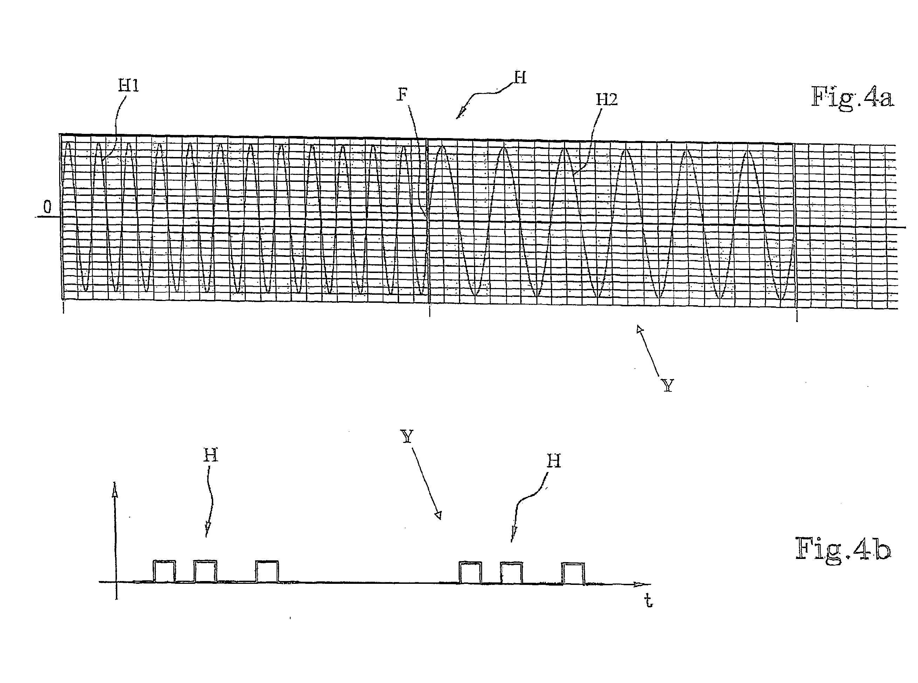

As shown in figure 4a by way of example, the first portion H1 may be a signal at the first frequency f1 comprised between 7.5 KHz and 8.5 KHz, preferably 8 KHz. The second portion H2 can be a signal at the second frequency f2 comprised between 3.5 KHz and 4.5 KHz, preferably 4 KHz.

Alternatively, the portions of signals H1 and H2 can compose the H pulse in the reverse order to the one shown.

In other words, the second portion H2 can precede the first portion H1 in time.

The various pulses H can be separated by intervals having a time duration of between 50 ms and 90 ms, preferably between 60 ms and 80 ms.

Each pulse H is preferably formed by a portion of the substantially periodic carrier signal at a main frequency, phase-modulated, with phase shifts of k*180°, with k a positive integer.

In other words, imagining a pulse H formed by a plurality of half-waves, a certain half-wave can for example be phase-shifted by 180°, and a next half-wave by an additional 180° (for a total of 360 °, in practice returning to be a zero phase shift with respect to the initial reference of the carrier signal). The same can then be valid for the successive half-wave phase shifts. The main frequency f of the carrier is preferably between 5 KHz and 10 KHz. By way of example, the main frequency f can substantially be about 8 kHz.

Each pulse H preferably has a time length of between 1 ms and 10 ms, preferably between 3 ms and 6 ms. By way of example, the time duration of each pulse H can substantially be about 4.5 ms.

Preferably the pulses H are separated by intervals with a time duration of between 30 ms and 120 ms, preferably between 50 ms and 100 ms.

By way of example, each pulse H can be formed by a plurality of half-waves (sine or square), with positive or negative sign depending on the modulation performed. In a possible embodiment, all pulses H are essentially equal.

Figure 4b schematically shows a waveform of the electrical signal ES having the above-described characteristics.

The electrical signal ES, except for the intensity, has a waveform that is substantially equal to the waveform of the electromagnetic signal Y defining the electromagnetic field EM.

The processing unit 60, via the detection module 50, thus detects a signal entirely similar to the signal emitted.

The pre-memorised parameters P can preferably be representative of the waveform of the electrical signal ES, such that the waveform can be recognized by the processing unit 60.

In this way, in case where there are several lawn mowers operating in a same area (which may coincide or not with the cutting area S), the processing unit 60 is still able to correctly determine the position of the lawn mower 1 with respect to the perimetral wire 110, even in the presence of other induced currents within the wire 110.

As mentioned herein above, the electromagnetic signal Y, defining the electromagnetic field EM, preferably comprises one or more pulses H.

The pulse (or pulses) H defines a minimal amount of data transmitted per unit of time, or data packet.

In practice, the transmission module 40 can be controlled such as to emit a data packet (defined, as mentioned, by one or more pulses H) at a predetermined temporal frequency. In other terms, the processing unit 60 controls the transmission module 40 so that it:
- emits the data packet;
- remains inactive for a certain period of time;
- might emit a new data packet, preferably identical to the preceding one;
- might remain inactive for a period of time that is substantially the same as the preceding one.

By way of example, the total time occupied by the data packet and the subsequent silence may be between 1 second and 2 seconds.

The inactivity interval (or silence) of the transmission module 40 is preferably determined according to the distance of the lawn mower 1 from the perimetral wire 110, determined according to the power with which the electrical signal ES is detected by the detection module 50.

In particular, until the electrical signal ES is detected with a power of below a predetermined threshold, or not detected at all, the processing unit 60 keeps the transmission module in the operating mode described above (total time between 1 and 2 seconds). When the electrical signal ES is received with a power that is greater than the threshold value, the above-cited overall time is reduced.

The total time is preferably reduced substantially in a monotonous way as a function of an increase in the power or strength of reception of the electrical signal ES. In other words, as the reception power of the electrical signal ES increases, the overall time defined by the data packet constituting the electromagnetic signal Y and the subsequent silence correspondingly decreases.

In this way, the overall time reduces progressively as the lawn mower 1 nears the perimetral wire 110.

This increases the rapidity with which the processing unit 60 can determine whether the lawn mower 1 is located inside or outside the cutting area S.

In the preferred embodiment, the progressive reduction of the overall time is directly proportional to the increase in the reception power of the electrical signal ES.

As mentioned herein above, the maximum value of the overall time can be comprised, for example, between 1 and 2 seconds; the minimum value of the overall time, corresponding to the maximum reception power of the electrical signal ES, can be between 10 ms and 30 ms. The lawn mower 1 preferably also comprises a localization module 70, such as a GPS module.

The localization module 70 is connected to the processing unit 60.

Owing to the cooperation with the localization module 70, the processing unit 60 can memorise the location of the perimetral wire 110 during operation of the lawn mower 1.

Thus the processing unit 60 can completely disable the transmission module 40, thereby saving energy for the emission of the electromagnetic field ES, when the lawn mower 1 is too far away from the perimetral wire 110 itself (i.e. when the distance between the lawn mower 1 and the perimetral wire 110, according to the map memorised by the localization module 70, is greater than a predefined threshold).

In addition or alternatively, the processing unit 60 can perform a check on the presence and integrity of the perimetral wire 110: as mentioned, thanks to the tracking module 70 the processing unit 60 is able to know the location (within the limits of the accuracy of the localization module 70 itself) of the perimetral wire 110; when, during movement of the lawn mower 1, the processing unit 60 does not detect the perimetral wire 110 where expected, it could then generate a notification signal, or alarm, to indicate a possible malfunction or a possible interruption of the perimetral wire 110 itself.

The invention provides important advantages.

Primarily, the apparatus of the invention can be used even where no cabled mains electrical supply is available.

The apparatus also enables minimising consumption of electricity, in particular with reference to the energy necessary for the electrical signal propagating along the perimetral wire.

## Claims

1. Apparatus for cutting grass comprising:
- a lawn mower (1), equipped with:
- a frame (10);
- one or more blades (30) mounted on said frame (10);
- movement means (20) mounted on said frame (10) for movement of said lawn mower (1);
- a perimetral structure (100) comprising at least a perimetral wire (110) delimiting a cutting area (S); **characterised in that**
- said lawn mower (1) further comprises a transmission module (40) for emitting an electromagnetic field (EM)
- said perimetral structure (100) is configured for:
- detecting said electromagnetic field (EM) via said wire (110);
- supplying, via the electromagnetic field (EM), an electrical signal (ES) which propagates in said perimetral wire (110);
- said lawn mower (1) further comprises a detection module (50) for detecting said electrical signal (ES);
- said lawn mower (1) further comprises a processing unit (60) for comparing said electrical signal (ES) with one or more pre-memorised parameters (P) and generating a control signal (CS) for said movement means (20) as a function of said comparison.

2. Apparatus according to claim 1, wherein said pre-memorised parameters (P) represent reference values for the power with which said electrical signal (ES) is detected by said detection module (50).

3. Apparatus according to claim 2, wherein said pre-memorised parameters (P) comprise:
- values representing a first increase/decrease profile (Z1) indicating an expected trend of the reception power of the electrical signal (ES) at an approach/distancing of the lawn mower (1) with respect to the perimetral wire (110), in a case in which said lawn mower (1) is located within the cutting area (S);
- values representing a second increase/decrease profile (Z2) indicating an expected trend of the reception power of the electrical signal (ES) at an approach/distancing of the lawn mover (1) with respect to the perimetral wire (110) in a case where the lawn mower (1) is located outside the cutting area (S).

4. Apparatus according to claim 3 wherein said first profile (Z1) is indicative of a variation in the power with which said electrical signal (ES) is received, as a function of the distance from the perimetral wire (110), which variation is slower than the variation described by said second profile (Z2).

5. Apparatus according to claim 3 or 4 wherein said processing unit (60) is configured for :
- determining variations over time of the power with which said electrical signal (ES) is detected by said detection module (50);
- comparing said variations with representative parameters of said first profile (Z1) and/or said second profile (Z2),
said control signal being generated as a function of such a comparison.

6. Apparatus according to any one of the preceding claims, wherein said processing unit (60) is active on said transmission module (40) for regulating, as a function of the distance between said lawn mower (1) and said perimetral wire (110), a transmission frequency with which said transmission module (40) emits data packets defining said electromagnetic field (EM).

7. Apparatus according to claim 6, wherein said processing unit (60) is configured such as to determine the distance between said lawn mower (1) and said perimetral wire (110) as a function of a power with which said electrical signal (ES) is detected by said detection module (50).

8. Apparatus according to claim 6 or 7, wherein said processing unit (60) is configured for increasing a transmission frequency accordingly with a reduction of the distance.

9. Apparatus according to any one of the preceding claims, wherein said lawn mower (1) further comprises a tracking module (70) suitable for determining a position in which said lawn mower (1) is located.

10. Apparatus according to claim 9, wherein said processing unit (60) is associated with said tracking module (70) for regulating said transmission module (40) as a function of the position detected by said tracking module (70).

11. Apparatus according to claim 9 or 10 wherein said processing unit (60) is configured for performing a control on a presence/integrity of said perimetral wire (110) as a function of the position detected by said tracking module (70) and of detections performed by said detection module (50).

## Patentansprüche

1. Vorrichtung zum Schneiden von Gras, umfassend:
- einen Rasenmäher (1), ausgestattet mit:
- einem Gehäuse (10);
- einer oder mehreren am Gehäuse (10) befestigte Klingen (30);
- am Gehäuse (10) befestigten Bewegungsmitteln (20) zum Bewegen des Rasenmähers (1);
- eine Umfangsstruktur (100), umfassend mindestens einen umlaufenden Draht (110), der einen Schneidbereich (S) abgrenzt, **dadurch gekennzeichnet, dass**
- der Rasenmäher (1) zudem ein Übertragungsmodul (40) umfasst, um ein elektromagnetisches Feld (EM) auszustrahlen;
- die Umfangsstruktur (100) ausgelegt ist, um:
- das elektromagnetische Feld (EM) mittels des Drahts (110) zu erfassen;
- über das elektromagnetische Feld (EM) ein elektrisches Signal (ES) zu liefern, das sich im umlaufenden Draht (110) verbreitet;
- der Rasenmäher (1) ferner ein Erfassungsmodul (50) umfasst, um das elektrische Signal (ES) zu erfassen, wobei der Rasenmäher (1) ferner eine Verarbeitungseinheit (60) umfasst, um das elektrische Signal (ES) mit einem oder mehreren vorgespeicherten Parametern (P) zu vergleichen und ein Steuersignal (CS) für die Bewegungsmittel (20) als eine Funktion des Vergleichs zu generieren.

2. Vorrichtung nach Anspruch 1, wobei die vorgespeicherten Parameter (P) Referenzwerte für die Stromstärke darstellen, mit der das elektrische Signal (ES) vom Erfassungsmodul (50) erfasst wird.

3. Vorrichtung nach Anspruch 2, wobei die vorgespeicherten Parameter (P) umfassen:
- Werte, die ein erstes Zunahme-/Abnahmeprofil (Z1) darstellen, das einen erwarteten Trend der Aufnahmestromstärke des elektrischen Signals (ES) bei einer Annäherung/Entfernung des Rasenmähers (1) zum umlaufenden Draht (110) angibt, in einem Fall, wenn der Rasenmäher (1) sich im Schneidbereich (S) befindet;
- Werte, die ein zweites Zunahme-/Abnahmeprofil (Z2) darstellen, das einen erwarteten Trend der Aufnahmestromstärke des elektrischen Signals (ES) bei einer Annäherung/Entfernung des Rasenmähers (1) zum umlaufenden Draht (110) angibt, in einem Fall, wenn der Rasenmäher (1) sich außerhalb des Schneidbereichs (S) befindet;

4. Vorrichtung nach Anspruch 3, wobei das erste Profil (Z1) auf eine Veränderung der Stromstärke hinweist, mit der das elektrische Signal (ES) empfangen wird, als eine Funktion der Entfernung vom umlaufenden Draht (110), wobei die Veränderung langsamer ist als die durch das zweite Profil (Z2) beschriebene Veränderung.

5. Vorrichtung nach Anspruch 3 oder 4, wobei die Verarbeitungseinheit (60) eingerichtet ist zum:
- Ermitteln im Lauf der Zeit von Veränderungen der Stromstärke, mit der das elektrische Signal (ES) vom Erfassungsmodul (50) erfasst wird;
- Vergleichen der Veränderungen mit repräsentativen Parametern des ersten Profils (Z1) und/oder des zweiten Profils (Z2),
wobei das Steuersignal als eine Funktion eines derartigen Vergleichs generiert wird.

6. Vorrichtung nach einem der vorhergehenden Ansprüche, wobei die Verarbeitungseinheit (60) auf dem Übertragungsmodul (40) aktiv ist, um als eine Funktion der Entfernung zwischen dem Rasenmäher (1) und dem umlaufenden Draht (110) eine Übertragungsfrequenz zu regulieren, bei der das Übertragungsmodul (40) Datenpakete, definierend das elektromagnetische Feld (EM) emittiert.

7. Vorrichtung nach Anspruch 6, wobei die Verarbeitungseinheit (60) eingerichtet ist, um die Entfernung zwischen dem Rasenmäher (1) und dem umlaufenden Draht (110) als eine Funktion einer Stromstärke, mit der das elektrische Signal (ES) vom Erfassungsmodul (50) erfasst wird, zu ermitteln.

8. Vorrichtung nach Anspruch 6 oder 7, wobei die Verarbeitungseinheit (60) eingerichtet ist, um eine Übertragungsfrequenz je nach einer Reduzierung der Entfernung zu erhöhen.

9. Vorrichtung nach einem der vorhergehenden Ansprüche, wobei der Rasenmäher (1) ferner ein Verfolgungsmodul (70) umfasst, das geeignet ist, um eine Position zu ermitteln, an der sich der Rasenmäher (1) befindet.

10. Vorrichtung nach Anspruch 9, wobei die Verarbeitungseinheit (60) mit dem Verfolgungsmodul (70) verbunden ist, um das Übertragungsmodul (40) als eine Funktion der vom Verfolgungsmodul (70) erfassten Position zu regulieren.

11. Vorrichtung nach Anspruch 9 oder 10, wobei die Verarbeitungseinheit (60) eingerichtet ist, um eine Kontrolle bezüglich der Anwesenheit/des einwandfreien Zustands des umlaufenden Drahts (110) als eine Funktion der durch das Verfolgungsmodul (70) erfassten Position und der durch das Erfassungsmodul (50) durchgeführten Erfassungen durchzuführen.

## Revendications

1. Appareil servant à couper l'herbe, comprenant :
- une tondeuse à gazon (1) équipé
- d'un châssis (10) ;
- d'une ou plusieurs lames (30) montées sur ledit châssis (10) ;
- un moyen de déplacement (20) monté sur ledit châssis (10) pour déplacer ladite tondeuse à gazon (1) ;
- une structure périmétrale (100) comprenant au moins un fil périmétral (110) délimitant une zone de coupe (S) ; **caractérisé en ce que**
- ladite tondeuse à gazon (1) comprend de plus un module de transmission (40) servant à émettre un champ électromagnétique (EM)
- ladite structure périmétrale (100) est configurée pour :
- détecter ledit champ électromagnétique (EM) via ledit fil (110) ;
- transmettre, via le champ électromagnétique (EM), un signal électrique (ES) qui se propage dans ledit fil périmétral (110) ;
- ladite tondeuse à gazon (1) comprend de plus un module de détection (50) servant à détecter ledit signal électrique (ES) ; ladite tondeuse à gazon (1) comprend de plus une unité de traitement (60) servant à comparer ledit signal électrique (ES) avec un ou plusieurs paramètres pré-mémorisés (P) et servant à générer un signal de commande (CS) pour ledit moyen de déplacement (20) en fonction de ladite comparaison.

2. Appareil selon la revendication 1, dans lequel lesdits paramètres pré-mémorisés (P) représentent des valeurs de référence pour la puissance avec laquelle ledit signal électrique (ES) est détecté par ledit module de détection (50).

3. Appareil selon la revendication 2, dans lequel lesdits paramètres pré-mémorisés (P) comprennent :
- des valeurs représentant un premier profil croissant/décroissant (Z1) indiquant une évolution supposée de la puissance de réception du signal électrique (ES) lors d'un approche/éloignement de la tondeuse à gazon (1) par rapport au fil périmétral (110), dans un cas où ladite tondeuse à gazon (1) est située à l'intérieur de la zone de coupe (S) ;
- des valeurs représentant un second profil croissant/décroissant (Z2) indiquant une évolution supposée de la puissance de réception du signal électrique (ES) lors d'un approche/éloignement de la tondeuse à gazon (1) par rapport au fil périmétral (110), dans un cas où la tondeuse à gazon (1) est située à l'extérieur de la zone de coupe (S).

4. Appareil selon la revendication 3, dans lequel ledit premier profil (Z1) est indicatif d'une variation de la puissance avec laquelle ledit signal électrique (ES) est reçu, en fonction de la distance depuis le fil périmétral (110), ladite variation est plus lente que celle décrite par ledit second profil (Z2).

5. Appareil selon la revendication 3 ou 4, dans lequel ladite unité de traitement (60) est configurée pour :
- déterminer les variations dans le temps de la puissance avec laquelle ledit signal électrique (ES) est détecté par ledit module de détection (50) ;
- comparer lesdites variations avec des paramètres représentatifs dudit premier profil (Z1) et/ou dudit second profil (Z2),
ledit signal de commande étant généré en fonction de ladite comparaison.

6. Appareil selon l'une quelconque des revendications précédentes, dans lequel ladite unité de traitement (60) est active sur ledit module de transmission (40) afin de régler, en fonction de la distance entre ladite tondeuse à gazon (1) et ledit fil périmétral (110), une fréquence de transmission avec laquelle ledit module de transmission (40) émet des paquets de données définissant ledit champ électromagnétique (EM).

7. Appareil selon la revendication 6, dans lequel ladite unité de traitement (60) est configurée de sorte à déterminer la distance entre ladite tondeuse à gazon (1) et ledit fil périmétral (110) en fonction d'une puissance avec laquelle ledit signal électrique (ES) est détecté par ledit module de détection (50).

8. Appareil selon la revendication 6 ou 7, dans lequel ladite unité de traitement (60) est configurée pour augmenter une fréquence de transmission selon une réduction de la distance.

9. Appareil selon l'une quelconque des revendications précédentes, dans lequel ladite tondeuse à gazon (1) comprend de plus un module de suivi (70) apte à déterminer une position dans laquelle ladite tondeuse à gazon (1) est située.

10. Appareil selon la revendication 9, dans lequel ladite unité de traitement (60) est associée au dit module de suivi (70) afin de régler ledit module de transmission (40) en fonction de la position détectée par ledit module de suivi (70).

11. Appareil selon la revendication 9 ou 10, dans lequel ladite unité de traitement (60) est configurée pour effectuer un contrôle sur une présence/intégrité dudit fil périmétral (110) en fonction de la position détectée par ledit module de suivi (70) et des détections effectuées par ledit module de détection (50).
